# EUROPEAN PATENT APPLICATION

(11) **EP 4 653 136 A1**
(43) Date of publication of application: **26.11.2025**
(21) Application number: 25177544.1
(22) Date of filing: 20.05.2025
(51) Int. Cl.: B24B 47/12, B24B 47/16, B24B 47/22, B24B 41/04, B24B 41/053

(54) **SPINDLE FOR SQUARING MACHINE**

(30) Priority: 23.05.2024 IT 202400011722
(71) Applicant: BMR S.p.A., 40026 Imola (BO) (IT)
(72) Inventor: ARDUINI, Gabriele, 42019 Scandiano (RE) (IT)
(74) Representative: Corradini, Cesare

(57) **Abstract**

**A spindle** (120) for squaring machines (10) is described which comprises:
- a supporting frame (125);
- a main motor (130) supported by the supporting frame and provided with a main drive shaft (W) rotatable about a central rotation axis (R1) thereof, wherein one free end of the main drive shaft (W1) is provided with a tool-holder plate to which an abrasive tool (U) is adapted to be fixed;
- a bushing (145) rotatably associated with the supporting frame (125) with respect to a rotation axis parallel to the central rotation axis (R1) of the main drive shaft (W) so that, rotating, it causes a translation of the main drive shaft (W) along a translation direction parallel to the central rotation axis (R1),
- an adjusting assembly configured to translate the main drive shaft (W) along said translation direction, wherein the adjusting assembly comprises:
∘ a secondary motor provided with a secondary drive shaft (160) thereof which is rotatable with respect to a central rotation axis (R2) thereof orthogonal to the central rotation axis (R1) of the main drive shaft (W), and

a driveline configured to transmit the rotary motion of the secondary drive shaft (160) to the bushing (145).

## Description

### TECHNICAL FIELD

The present invention concerns the field of slab processing, for example particularly ceramic slabs such as ceramic tiles for floor or wall covering.

In detail, embodiments of the present invention refer to a spindle for rectifying slabs and to a squaring machine provided with such a spindle.

### PRIOR ART

In the field of machines for squaring slab-like elements, for example ceramic ones such as ceramic tiles but also glass slabs or similar, it is known to use spindles arranged along a movable resting surface along an advancement direction of the ceramic tiles which precisely carry out the rectifying operations, i.e. finishing and alignment operations of the sides of the tile.

As is known, the spindles are generally provided with a motor and a drive shaft, rotatable around a central axis thereof, provided with a free end to which an abrasive tool, such as an abrasive grindstone, is rigidly fixed.

During the aforementioned rectifying operations, it is essential to correctly position the shaft and, therefore, the abrasive grindstone that acts on the ceramic tile removing the ceramic material, in order to be able to comply with today's increasingly high quality standards.

In particular, a plurality of supporting spindles are arranged along the movable resting surface, each of which is adapted to intercept the ceramic slab in a different position (gradually closer and closer to a vertical median surface of the ceramic tile parallel to the advancement direction) in order to achieve a gradual processing of the side of the ceramic slab until it is brought to the desired finished state.

For this purpose, each spindle is provided with an adjusting assembly that allows the drive shaft (and with it the abrasive grindstone) to be moved towards/away from the ceramic slab in order to arrange the abrasive grindstone in its desired working position and compensate for its wear during use.

The adjusting assemblies of known art generally comprise a tube inside which the drive shaft is rotatably fixed and a drive mechanism for moving the tube and therefore the drive shaft itself.

Said drive mechanism provides for the use of a rotary motor provided with a drive shaft rotatable about a rotation axis parallel to the central rotation axis of the drive shaft to which the grindstone is connected.

This drive mechanism then provides for the use of a driveline assembly that allows the rotary motion of the drive shaft to be transformed into a translatory motion of the tube and thus cause a translation of the drive shaft of the spindle and therefore of the abrasive grindstone.

A need felt in the sector is to make the drive mechanism and spindle as robust as possible and decrease the stresses on the rotary motor.

An object of the present invention is to meet these and other needs (which will become better apparent hereinafter) of the prior art, within the framework of a simple, rational and cost-effective solution.

Such object is achieved by the features of the invention reported in the independent claim. The dependent claims outline preferred and/or particularly advantageous aspects of the invention.

### DISCLOSURE OF THE INVENTION

The invention, in particular, makes available a spindle for squaring machines which comprises:
- a supporting frame;
- a main motor supported by the supporting frame and provided with a main drive shaft rotatable about a central rotation axis thereof, wherein one free end of the main drive shaft is provided with a tool-holder plate to which an abrasive tool is adapted to be fixed;
- a bushing rotatably associated with the supporting frame with respect to a rotation axis parallel to the central rotation axis of the main drive shaft so that, rotating, it causes a translation of the main drive shaft along a translation direction parallel to the central rotation axis,
- an adjusting assembly configured to translate the main drive shaft along said translation direction, wherein the adjusting assembly comprises:
   ∘ a secondary motor provided with a (own) secondary drive shaft which is rotatable with respect to a central rotation axis thereof orthogonal to the central rotation axis of the main drive shaft,
   ∘ a driveline configured to transmit the rotary motion of the secondary drive shaft to the bushing.

Thanks to this solution, the stresses on the secondary motor are minimised, making the spindle particularly robust.

This particular relative orientation of the secondary motor and the main drive shaft therefore allows to minimize the malfunctions of the secondary motor, allowing to make the positioning of the main drive shaft and therefore of the grindstone more repeatable and reliable.

Overall, therefore, this particular structure of the spindle allows to minimize production waste due to incorrect positioning of the grindstone.

One aspect of the invention provides that the secondary drive shaft can be connected to said driveline by means of a mechanism that allows the rotary motion of the secondary drive shaft to be transmitted to an output shaft orthogonal to the secondary drive shaft, i.e. rotatable (on itself) around a rotation axis orthogonal to the central rotation axis of the secondary drive shaft and parallel and eccentric with respect to the central rotation axis R1 of the main drive shaft.

Yet another aspect of the invention provides that such a mechanism, for example, may comprise (for example only) a reducer.

Another aspect of the invention provides that the secondary drive shaft can be connected to the driveline by means of a reducer, and that preferably the reducer can be provided with an input gear connected to the secondary drive shaft and an output gear provided with an output shaft orthogonal to the secondary drive shaft and parallel and eccentric with respect to the central rotation axis of the main drive shaft, wherein the output shaft is connected, through the driveline, to the bushing (of the main drive shaft).

Thanks to this solution, the structure of the spindle is particularly rational and effective in order to allow a correct and punctual, or particularly precise, positioning of the main drive shaft along the translation direction and therefore of the grindstone.

Yet another aspect of the invention provides that the reducer may be a worm reducer. Thanks to this solution, the spindle is even more robust.

This type of reducer, in fact, is structurally particularly suitable for reducing the stresses that reach the secondary motor and, at the same time, particularly suitable for allowing a precise control of the actuation by the secondary motor itself.

A further aspect of the invention provides that the driveline (may be a belt driveline and) may comprise a driving pulley connected to the output shaft (of the reducer) and a driven pulley or toothed crown, preferably with a larger diameter with respect to the driving pulley, associated with the bushing and a belt, preferably toothed, looped on the driving pulley and the driven pulley or toothed crown.

Thanks to this solution, the structure of the driveline is particularly suitable to allow the transfer of the motion imposed by the secondary motor to the bushing.

Still, a further aspect of the invention provides that said driveline may comprise a tensioning assembly (for tension adjustment) of the belt.

Thanks to this solution, the spindle is particularly reliable.

Another aspect of the invention provides that said tensioning assembly may comprise an eccentric hub fitted on the output shaft of the reducer and orientable with respect to the supporting frame and on which the driving pulley is mounted, and that a change in the orientation of the eccentric hub may cause the change in the spacing between the driving pulley and the driven pulley or toothed crown.

Thanks to this solution, the structure of the tensioning assembly is as effective as it is intuitive and simple to use.

Simply by rotating the eccentric hub, in fact, an adjustment of the mutual distance between the driving pulley and the driven toothed crown is obtained, thus allowing the belt to be tensioned.

Another aspect of the invention provides that the bushing can define with the supporting frame a screw-nut coupling, for example by means of a thread and a counter-thread (of a shape conjugated to the thread so as to define a shape coupling with it) made respectively on the bushing and on the supporting frame.

In particular, thanks to this solution, that is, to said screw-nut coupling, a rotation of the bushing in one direction (for example clockwise) causes a translation thereof along the translation direction in a first sense, while the rotation of the bushing in the opposite direction (for example counterclockwise) causes a translation thereof in a second direction opposite to the first sense.

Another aspect of the invention provides that the spindle may comprise a tube inserted inside the supporting frame and slidable with respect thereto along the translation direction, wherein the main drive shaft is fixed inside the tube with a single rotational degree of freedom (around a central rotation axis thereof, and also integral in movement thereto along said translation direction), said tube being inserted inside the bushing (i.e. wrapped by the same) and movable with the same along the translation direction.

Yet another aspect of the invention provides that said tube can be prevented from rotating by means of a pin inserted in a slot obtained in the tube itself.

The invention further makes available a squaring machine for slabs which comprises:
- a load-bearing frame;
- a pair of side banks supported by said load-bearing frame and movable in mutual approach/distancing along a mutual horizontal flanking direction, wherein each side bank carries:
   ∘ a set of spindles according to one or more (e.g. all) of the aspects described above; and
   ∘ at least one belt of a conveyor, wherein said belts (carried by the side banks) make available a movable resting surface adapted to receive and move at least one slab or a succession of slabs along a horizontal advancement direction orthogonal to the flanking direction.

Another aspect of the invention provides that each set of spindles can be composed of, or comprise, a plurality of spindles aligned along an alignment direction parallel to the advancement direction and arranged with the central rotation axis of the main drive shaft lying on a surface orthogonal to said alignment direction.

Thanks to this solution, the spindles are effectively positioned in order to rectify the opposed sides of the slab.

Yet another aspect of the invention provides that each set of spindles may comprise at least one spindle facing a spindle of the other set of spindles, wherein the central rotation axes of the main drive shafts of the facing spindles are coaxial to each other.

Thanks to this solution, each slab can be simultaneously contacted at the opposed sides by a respective one of said spindles.

In this way, the contextual pressure applied by the spindles allows the slab to be kept with the opposed flanks parallel to the advancement direction.

### BRIEF DESCRIPTION OF THE DRAWINGS

Further features and advantages of the invention will be more apparent after reading the following description provided by way of a non-limiting example, with the aid of the figures illustrated in the accompanying drawings.
Figure 1 is a first perspective view of a squaring machine according to the invention.
Figure 2 is a front view from above of the squaring machine of figure 1.

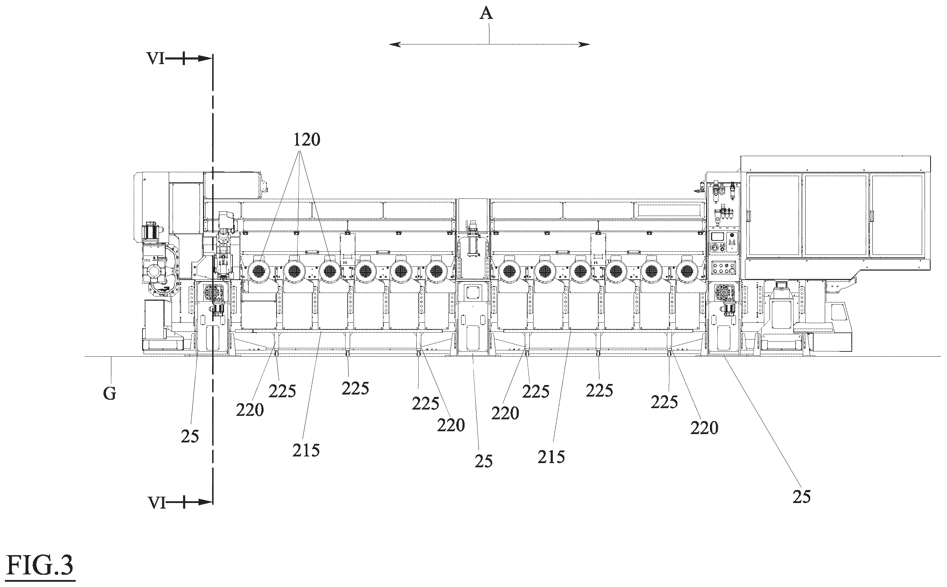

Figure 3 is a side front view of the squaring machine of figure 1.
Figure 4 is a perspective view of a bridge support of the squaring machine of figure 1.
Figure 5 is a front view of another embodiment of a bridge support usable in the squaring machine according to the invention.
Figure 6 is a sectional view along trace VI-VI of figure 3 of the squaring machine itself.
Figure 7 is an enlarged view of a portion of figure 6.
Figure 8 is a front view from behind of a spindle of the squaring machine of figure 1.
Figure 9 is a side view in partial section/transparency of the spindle of figure. 8.
Figure 10 is a sectional view along trace X-X of figure 9.
Figure 11 is a schematic perspective view of a portion of the spindle in which a driveline and a tensioning assembly are better visible.

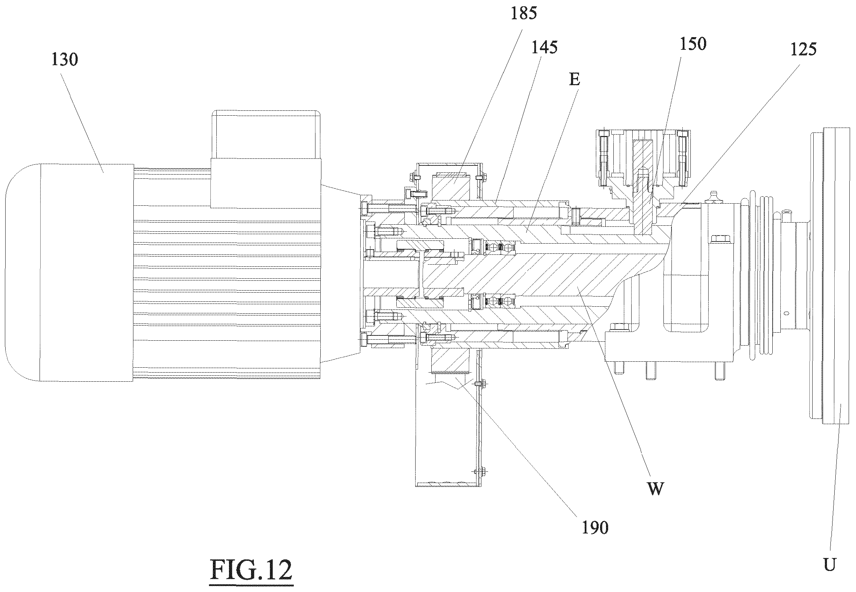

Figure 12 is a schematic longitudinal sectional view of the spindle of figure 8.

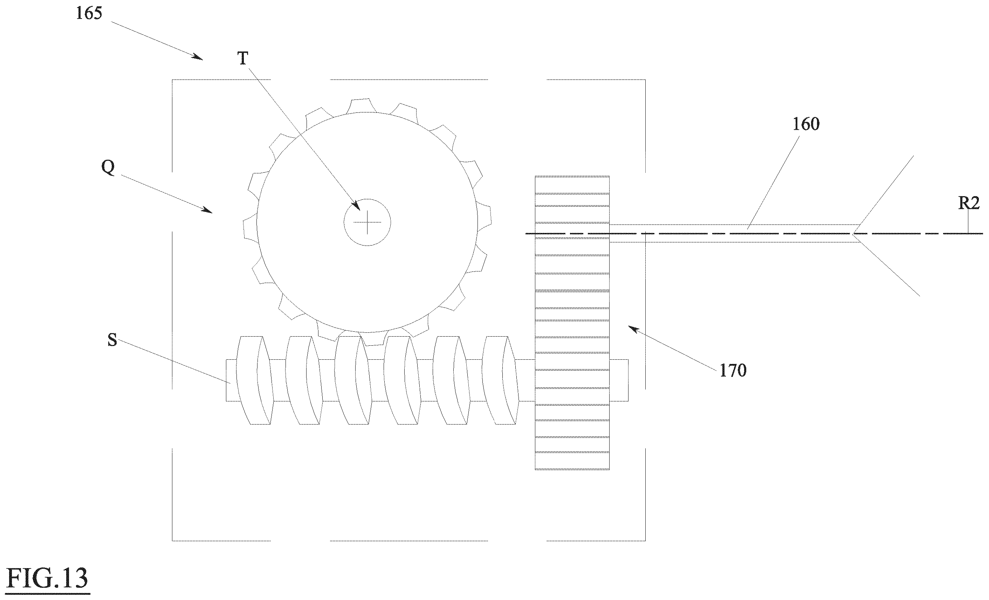

Figure 13 is a particularly schematic view of a secondary drive shaft and a reducer connected thereto.
Figure 14 is a schematic perspective view in partial transparency of a bridge support and of a tract of lower portions of the side banks slidably associated with the bridge support.

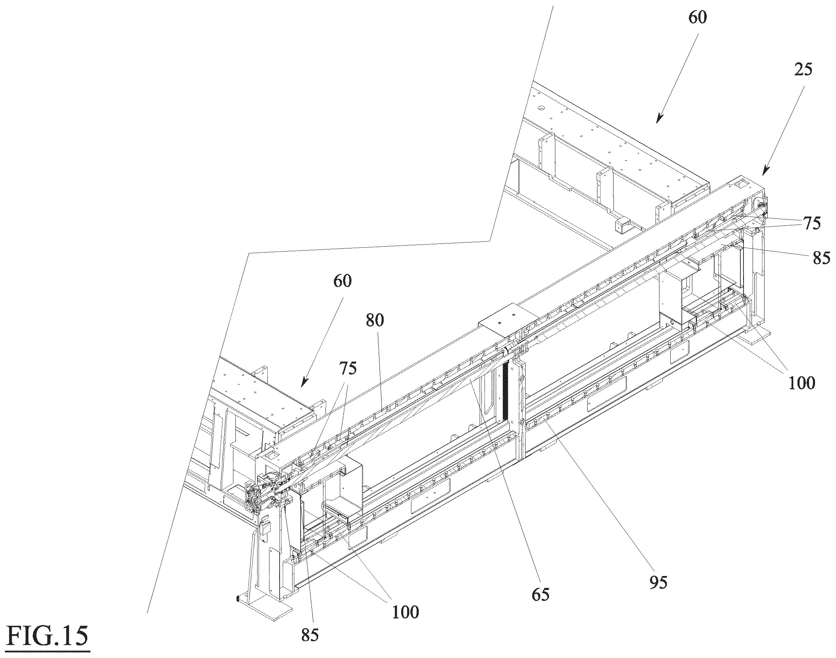

Figure 15 is the view of figure 13 in section with respect to a vertical median sectional plane of the bridge support parallel to the longitudinal development thereof.

### DETAILED DESCRIPTION

With particular reference to these figures, 10 denotes overall a squaring machine for processing slabs 15 such as, for example, ceramic slabs 15 in marble or stoneware (for example single-fired or double-fired porcelain stoneware) or granite or other natural stone, or even slabs 15 in glass or similar.

Each slab 15 substantially has a shape of a parallelepiped with a reduced height (thickness) and a substantially quadrangular base (in plan), for example rectangular or square. In practice, the slab has two first opposed flanks that are substantially parallel and two second flanks adjacent to the first flanks and opposed to each other and substantially parallel.

The squaring machine 10, as will better appear below, comprises a load-bearing frame 20 that supports a movable resting surface P, preferably substantially horizontal, adapted to receive restingly at least one slab 15 (for example a succession of slabs) and to advance it (in an advancement sense) along an advancement direction A (for example horizontal or substantially horizontal).

This load-bearing frame 20 comprises, first of all, a plurality of bridge supports 25 for the squaring machine 10 to rest on the ground.

Such bridge supports 25 of the load-bearing frame 20 are preferably all homologous in shape and dimensions.

These bridge supports 25 are between them preferably aligned with respect to the advancement direction A, and also arranged at a mutual non-zero distance along the advancement direction itself.

Each bridge support 25 is rigid, i.e. non-deformable when subjected to the usual loads for which it is envisaged, for example metallic.

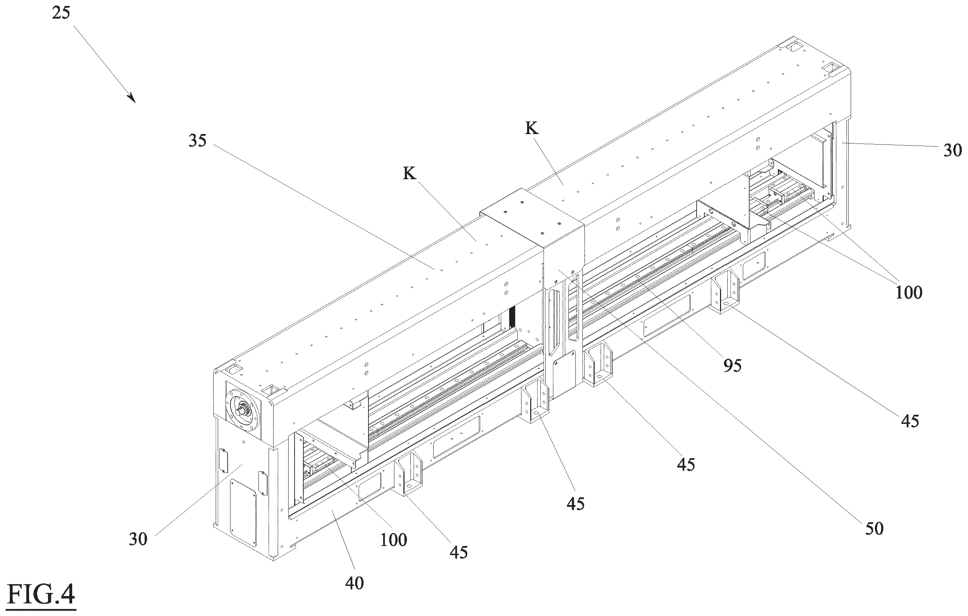

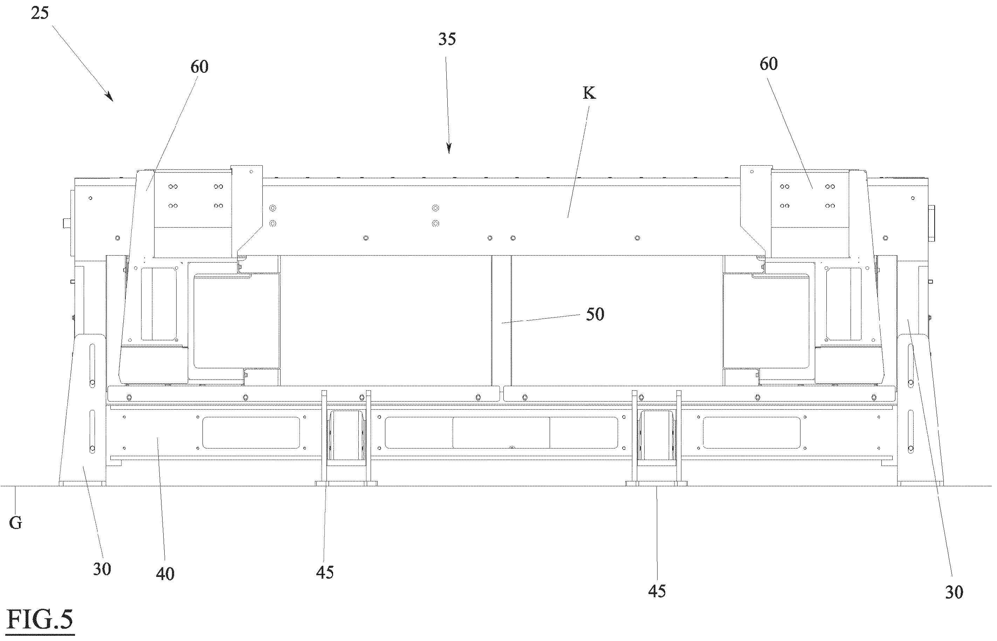

Each bridge support 25, as best visible in figure 4 or 5, comprises a pair of opposed and parallel uprights 30, vertical or substantially vertical, each of which has a lower end for resting on the ground G and an opposed upper end.

Each bridge support 25 then comprises a crossbar 35 for connecting the uprights 30, which develops longitudinally orthogonally thereto, i.e. substantially horizontally and also orthogonally to the advancement direction A, fixed to the uprights 30 at the upper ends thereof (for example above the uprights 30).

Each bridge support 25 may also comprise at least one reinforcing crossbar 40 for connection between the uprights 30, which (is parallel to the crossbar 35, that is) develops longitudinally orthogonally to the uprights 30, i.e. substantially horizontally and also orthogonally to the advancement direction A.

Said reinforcing crossbar 40 is fixed to the uprights 30 at or in any case near the lower end thereof, i.e. it is fixed to each of said uprights 30 at a distance from the lower end thereof greater than the distance between said reinforcing crossbar 40 and the upper end of the upright 30.

In other words, as best visible in figures 4 or 5, the reinforcing crossbar 40 can substantially define an "H"-shaped structure with the uprights 30.

Preferably, as best visible in these figures 4 or 5, the reinforcing crossbar 40 can be provided below with feet for resting 45 on the ground G.

Still, each bridge support 25 may comprise a reinforcing upright 50, which is parallel to the uprights 30 and axially interposed therebetween, preferably in a position equidistant from each of the uprights 30.

Said reinforcing upright 50 develops longitudinally substantially vertically and has a first (lower) longitudinal end fixed, for example screwed, to the reinforcing crossbar 40 and a second longitudinal end fixed, for example screwed, to the crossbar 35.

Returning to the crossbar 35 of the bridge support 25, as visible in figure 5, this can be defined by a single profile K (for example metallic) that makes the entire development of the crossbar 35 available, or as visible in figure 4, this can be defined by several profiles (for example homologous to each other in shape and dimensions) which are arranged in succession to each other to make the (longitudinal) development of the crossbar 35 available as a whole.

In this case, as visible in figure 4, each profile K may have one end fixed to a respective upright 30 and the other end fixed to the reinforcing upright 50.

Similarly, the reinforcing crossbar 40, as visible in figure 5, can be defined by a single profile K (for example metallic) which makes the entire development of the reinforcing crossbar 40 available, or, as visible in figure 4, this can be defined by several respective profiles (for example homologous to each other in shape and dimensions) which are arranged in succession to each other to make the development of the reinforcing crossbar 40 available as a whole.

In this case, as visible in figure 4, each profile K of the reinforcing crossbar 40 may have one end fixed to a respective upright 30 and the other end fixed to the reinforcing upright 50.

This possible modularity of the crossbar 35 and of the reinforcing crossbar 40 allows the load-bearing frame 20 to be adapted (in width) to the format of the slabs 15 being processed.

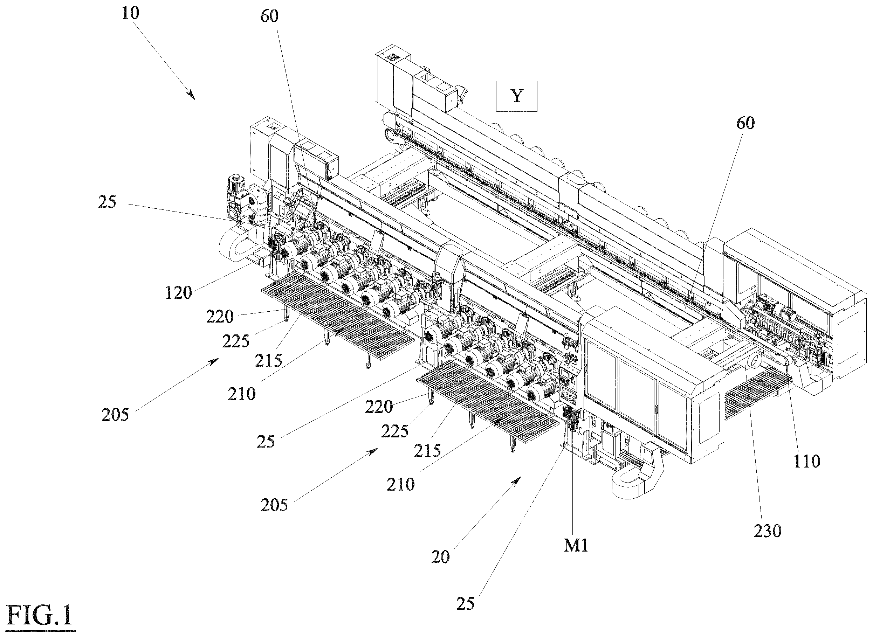

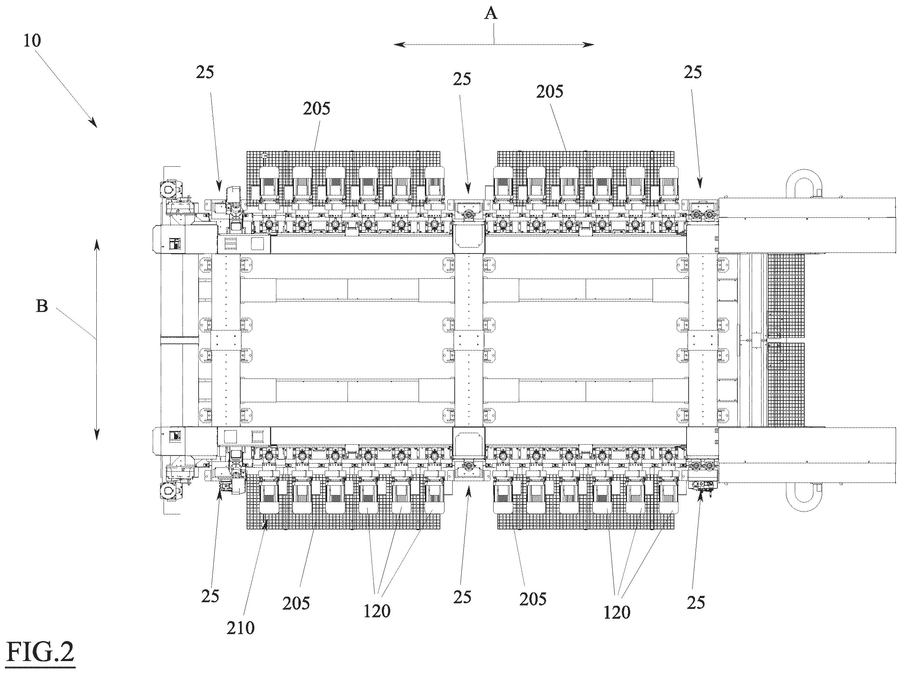

As better visible in figure 1 or 2, said plurality of bridge supports 25 comprises at least two end bridge supports 25, i.e. each of which is arranged at (or in any case near) a respective (longitudinal) end of the squaring machine 10 with respect to the advancement direction A, and at least one intermediate bridge support 25 interposed between the end bridge supports 25.

For example, the load-bearing frame 20 can comprise three bridge supports 25, for example only three bridge supports 25, aligned with each other and at a mutual non-zero distance along the advancement direction, of which said two end bridge supports 25, and a central (intermediate) bridge support 25, which is preferably equidistant from the two end bridge supports 25, i.e. it is preferably placed at a median vertical plane of the squaring machine 10 orthogonal to the advancement direction A.

Optionally, the load-bearing frame 20 may then comprise a plurality of little crossbars 25 for connecting the bridge support which connect two consecutive bridge supports 25 along the advancement direction A.

Each little crossbar is elongated along its own longitudinal axis and has a first longitudinal end fixed to one of the bridge supports 25, preferably proximally to the lower end of one of the uprights 30 of said bridge support 25, and the opposed end fixed to a consecutive bridge support 25, for example proximally to the lower end of one of the uprights 30 of said consecutive bridge support 25.

In this case, i.e. in the event that said little crossbars can be present, preferably, two consecutive bridge supports 25 are connected to each other by at least one pair of (reinforcing) little crossbars, each of which connects two respective uprights of the bridge supports 25, i.e. a little crossbar connecting one upright 30 of one bridge support 25 to one upright 30 of the other bridge support 25 and a little crossbar connecting the other upright 30 of said bridge support 25 with the other upright 30 of the other bridge support 25.

It is possible to provide that, for example, the load-bearing frame 20 can only comprise said plurality of bridge supports 25.

The squaring machine 10 then comprises a pair of parallel side banks 60, which develop longitudinally along the advancement direction A, and which are supported by the load-bearing frame 20.

The side banks 60 are slidably associated with the bridge supports 25 of the plurality, that is, slidably associated with the crossbars 35 of the bridge supports 25, in a movable manner in mutual approach/distancing, along a mutual flanking direction B orthogonal to the longitudinal axis of the side banks themselves, that is, with respect to a horizontal or substantially horizontal flanking direction B (and parallel to the resting surface P) and orthogonal to the advancement direction A.

In other words, the side banks 60 by moving in mutual approach/distancing along said flanking direction B slide along the longitudinal development of the crossbars 35 of the bridge supports 25.

These crossbars 35 of the bridge supports, in use, are therefore horizontal or substantially horizontal and develop (longitudinally) parallel to the flanking direction B. Advantageously, the squaring machine 10 comprises a translation movement of the side banks 60.

Said translation assembly comprises, first of all, at least one drive mechanism, for example at least one pair of drive mechanisms each of which is associated with, i.e. mounted on, a respective one of said bridge supports 25, preferably at least one pair of drive mechanisms each of which is associated (that is, mounted) on a respective one of said end bridge supports 25.

It is not excluded, however, that the squaring machine may comprise a drive mechanism for each bridge support 25.

Each drive mechanism comprises a screw 65, connected (i.e. fixed) to the crossbar 35 of the respective bridge support 25, and arranged with its own longitudinal axis parallel to the flanking direction B.

The screw 65 is provided along its longitudinal development with a first thread F1 and a second thread F2 (distinct) mutually opposed (i.e. with opposed winding senses).

Each drive mechanism then comprises a pair of nuts C1,C2, of which a first nut C1 and a second nut C2, each of which is screwed at a respective one of said first thread F1 and second thread F2.

Each drive mechanism again comprises an electric motor M1, for example brushless, connected to the screw 65 and configured to drive the screw 65 in rotation (on itself), around a rotation axis parallel to the flanking direction B, selectively in one sense or in the opposite sense.

The electric motors M1 of the drive mechanisms are independent of each other and adapted to be driven synchronously, i.e. at the same speed and in the same sense.

The rotational actuation of the screw 65 in one direction results in a mutual approach of the first nut C1 and the second nut C2 along the flanking direction B, while the rotational actuation of the screw 65 in the opposite direction results in a mutual distancing of the first nut C1 and the second nut C2 with respect to the flanking direction B.

The first nut C1 and the second nut C2 are, as will appear better below, each connected (directly or indirectly) to a respective side bank 60 so as to move the same along the flanking direction B.

The screw 65 and the first and second nuts C1,C2 are preferably at least partially, for example preferably entirely, contained in an accommodating channel made in the crossbar 35 of the respective bridge support 25.

In other words, the crossbar 35 of the bridge support 25 can be substantially C-shaped, i.e. be concave and arranged with concavity facing the ground, i.e. towards the reinforcing crossbar 40, so as to define an accommodating channel inside which the screw 65 and the nuts C1,C2 (first and second) are at least partially accommodated.

The translation movement then comprises at least one guide mechanism of the side banks 60 along the flanking direction B, for example a guide mechanism for each bridge support 25.

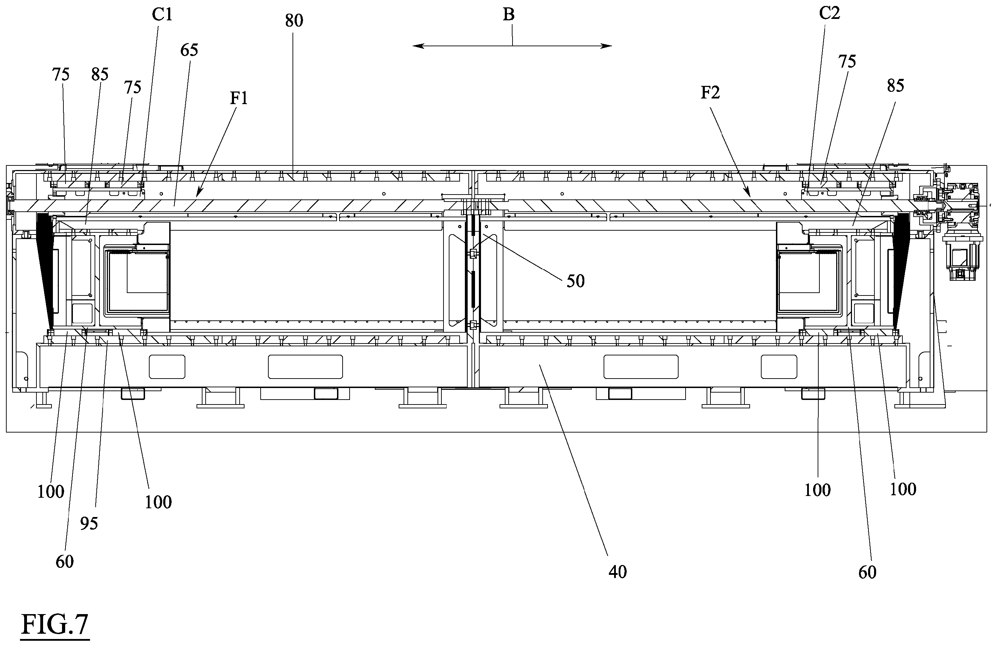

This guide mechanism, better visible in figure 7, comprises (at least) a pair of carriages 75 each of which is movable (in translation) along a sliding guide 80, preferably a recirculating ball guide, which develops longitudinally along the flanking direction B.

For example, said sliding guide 80, which as said is preferably of the recirculating ball type, is fixed, without residual degrees of freedom, to the crossbar 35 of the bridge support 25.

The sliding guide 80 and the pair of carriages 75 are preferably at least partially, for example preferably entirely, contained in said accommodating channel made in the crossbar 35 of the respective bridge support 25.

Each carriage 75 is connected (and fixed) to a respective side bank 60 of said side banks, for example by means of a respective support bracket 85 which is fixed, for example screwed, to the respective carriage 75 and further fixed, for example screwed, to the respective side bank 60.

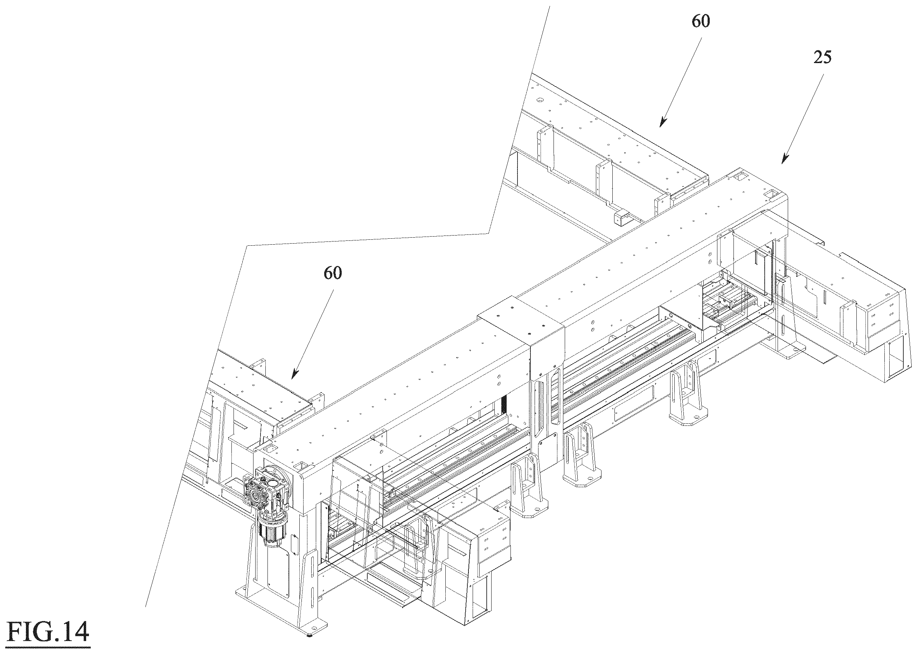

Preferably, each guide mechanism may comprise two pairs of carriages 75 movable along the sliding guide 80, each pair of which is connected to a respective side bank 60. For example, as best visible in figure 14, each pair of carriages 75 is connected to the respective side bank 60 by means of a same support bracket 85, which is fixed, for example screwed, to each of said carriages 75 of the respective pair and fixed to the respective side bank 60.

Each side bank 60 is therefore integral in translation along the flanking direction B to the respective carriage 75, i.e. to the carriages 75 of the respective pair, along the sliding guide.

Preferably, each guide mechanism may comprise a further sliding guide 95, for example of the recirculating ball type, which develops longitudinally along the flanking direction B. For example, said further sliding guide 95 can be associated, i.e. mounted, on the reinforcing crossbar 40 of the respective bridge support 25.

Each guide mechanism can therefore comprise a pair of further carriages 100 each of which is movable, in translation, along the further sliding guide 95 (and therefore movable along the flanking direction B) and connected to a respective side bank 60, for example screwed to the respective side bank.

Preferably, said further sliding guide 95 and said pair of further carriages 100 can be accommodated, at least partially, for example entirely, within a channel made in the reinforcing crossbar 40.

In other words, the reinforcing crossbar 40 can have a groove that develops longitudinally along the flanking direction, which substantially defines a concavity facing upwards, i.e. towards the crossbar 35 of the respective bridge support 25.

Said groove defines an accommodating channel within which said further sliding guide 95 and said pair of further carriages 100 are at least partially accommodated, preferably entirely accommodated.

Preferably, each guide mechanism, as best visible in figure 14, may comprise two pairs of further carriages 100 movable along the further sliding guide 100, each pair of which is connected, for example screwed, to a respective side bank 60.

In particular, each side bank 60 is arranged resting (and fixed) on the respective further carriage 100, i.e. on the respective pair of further carriages 100.

The guide mechanisms associated with the bridge supports 25 where a drive mechanism is provided are connected to said drive mechanism so as to transmit the motion of the first nut C1 and of the second nut C2 to the side banks 60.

In particular, the carriages 75 of said guide mechanisms are each connected to a respective one between the first nut and the second nut.

Each (first and second) nut C1,C2, thanks to the sliding guide 80, is therefore prevented from rotating, and (when the screw is driven in rotation) translates along the flanking direction B in one sense or the other depending on a rotation sense of the screw 65.

For example, it is possible to envisage that the first nut C1 and the second nut C2 can each be made as a single body with a respective carriage 75, i.e. with a respective pair of carriages 75.

The translation of the first nut C1 and the second nut C2, in mutual approach/distancing along the flanking direction B, results in the translation in mutual approach/distancing of the carriages 75 of the respective guide mechanism and therefore the mutual approach/distancing of the side banks 60.

As mentioned above, the load-bearing frame 20 supports a movement assembly for the movement of the slabs 15 that makes available said resting surface P movable along the advancement direction A.

In particular, the movement assembly is configured to move each slab 15 so that it lies (with the large visible/laying surfaces) on said resting surface P, for example substantially horizontal, and advances along the advancement direction A, with the first flanks to be rectified parallel to the advancement direction.

The movement assembly comprises a pair of conveyors, in particular of the belt or tape type, each of which is supported on (i.e. mounted on) a respective side bank 60.

Each conveyor comprises a lower flexible member, in particular a belt 110, which has an upper branch parallel to the advancement direction and defines a portion of the resting surface P movable for the slabs 15.

The lower flexible members of the pair of conveyors, i.e. the respective upper branches, are substantially coplanar and, together, define (i.e. make available) said resting surface P.

For example, each lower flexible member comprises said belt 110 closed on itself into a ring and wound on at least one driving pulley, driven in rotation by a respective electric motor, and at least one driven pulley (in the example a plurality of driven pulleys).

Each (belt or tape) conveyor can then comprise an upper flexible member, which has a lower branch parallel to the advancement direction and defines a movable contact and pressure portion with the slabs 15.

Each upper flexible member is superimposed, for example superimposed in plan and vertically aligned with the lower flexible member, i.e. with said belt 110, of the respective conveyor.

For example, each upper flexible member can be associated with the respective side bank 60 in a height-adjustable manner, so as to vary the dimension of the gap existing between the lower flexible member and the upper flexible member, in particular between the upper branch of the lower flexible member and the lower branch of the upper flexible member, as a function of the thickness of the slabs 15.

The upper flexible members of the pair of tape conveyors, i.e. the respective lower branches, are substantially coplanar and, together, define a (horizontal) contact and pressure surface adapted to contact and press on the upper (visible) surface of the slabs 15. For example, each upper flexible member comprises or consists of a belt closed on itself into a ring and wound on at least one driving pulley, driven in rotation by a respective electric motor (for example coinciding with the electric motor), and at least one driven pulley (in the example a plurality of driven pulleys), not visible.

The electric motors of both conveyors are driven synchronously (i.e. at the same speed and in the same sense) so as to allow the advancement of the slabs 15 along the advancement direction A with the first flanks parallel to the advancement direction itself. The lower flexible members (i.e. said belts 110), i.e. the upper branches thereof, may preferably have a greater length than the respective upper flexible members, i.e. the lower branches thereof, so that one end of the lower flexible members, advantageously the upstream end in the advancement sense of the slabs 15 along the advancement direction A imparted by the movement assembly, is offset with respect to the respective upper flexible member.

In practice, said offset end of the lower flexible members, i.e. of the belts 110, defines an input tract of the movement assembly on which the slab 15 rests before being wedged between the lower flexible members, i.e. said belts 110, and the upper flexible members, i.e. before being wedged between the resting surface P and said contact and pressure surface, and being firmly pressed therebetween.

The variation of the spacing of the side banks 60 actually defines (i.e. entails) a corresponding variation of the spacing of the conveyors and, therefore, the variation of the amplitude of the resting surface P defined by them as a function of the format of the slabs 15.

In addition, the spacing of the side banks 60 (i.e. the distance between them with respect to the flanking direction) is adjusted, from time to time according to the dimensions of the slabs 15, in particular the distance between the first flanks thereof, so that the first flanks of the slabs 15 protrude laterally (for a small tract), along a direction parallel to the flanking direction B, with respect to the resting surface P or substantially cantilevered from it.

Each conveyor may comprise a presser device (not illustrated, per se known and therefore not described in detail), which is configured to push the upper branch of the lower flexible member, i.e. of the belt 110, and the lower branch of the upper flexible member in mutual approach.

For example the pressor device can comprise one or more support rods arranged inside the ring defined by each flexible member or by the only upper flexible member that support a plurality of sliding blocks aligned and adjacent along the advancement direction C and pushed towards the other flexible member by compression springs.

For example, the squaring machine 10 may preferably also comprise a centring assembly (not illustrated) configured to centre, with respect to a centring direction parallel to the flanking direction B, the slab 15 on the resting surface P.

The centring assembly may comprise, for example, a pair of sideboards each slidably associated with respect to a respective side bank 60 and operable, e.g. by a preferably pneumatic actuator, in mutual approach/distancing from the resting surface P.

The squaring machine 10 then comprises a pair of set of spindles 120, each set of which (comprises a plurality of spindles and) is (carried, i.e. mounted i.e.) fixed to a respective one of said side banks 65 and movable therewith along the flanking direction B.

Each set of spindles 120, as visible in figure 1 or 2, comprises a plurality of spindles 120 aligned along an alignment direction parallel to the advancement direction A of the slabs 15.

Each spindle 120 comprises, first of all, a supporting frame 125, for example substantially cylindrical, internally hollow (i.e. provided with a cavity passing from one axial end to the other of the supporting frame 125).

The supporting frame 125 is rigid, i.e. non-deformable under torsion and/or flexion and/or compression when subjected to the usual loads for which it is envisaged.

The spindle 120 then comprises a main motor 130, supported by the supporting frame 125 (i.e. connected, for example indirectly, to the supporting frame such as to be supported by the same) provided with a main drive shaft W rotating about its own central rotation axis R1.

The main motor 130 is for example an electric motor provided with a stator and a rotor associated with the main drive shaft W and preferably coaxial therewith.

The main drive shaft W comprises an (rear) end and an opposed free (front) end, to which a tool-holder plate is rigidly fixed, directly or indirectly, to which an abrasive tool, for example an abrasive grindstone U, is adapted to be fixed.

Each spindle 120 is thus provided with an abrasive tool, i.e. said abrasive grindstone U, connected to the main drive shaft W and rotating (with the main drive shaft itself) about said central rotation axis R1.

The abrasive grindstone U is defined by a discoidal/annular body (coaxial to the central axis) comprising an attachment surface, facing the electric motor, which is fixed (in a removable way) to the free end of the drive shaft, for example at said tool-holder plate provided therein, and an opposed free abrasive surface.

The abrasive surface represents the abrasive front of the abrasive grindstone U, i.e. the front end (i.e. proximal to the resting surface P) of the abrasive grindstone U.

In particular, the main drive shaft W is inserted rotatably, and preferably coaxially, inside a tube E.

This tube E (preferably rigid, i.e. not deformable by torsion and/or flexion and/or compression when subjected to the usual loads for which it is envisaged, for example metallic), for example substantially cylindrical, defines a through channel, preferably also cylindrical and coaxial to the tube E.

The tube E is preferably inserted (preferably coaxially) inside the supporting frame 125 with the possibility of sliding axially inside (and with respect to) the same along a translation direction parallel to the central rotation axis R1 of the main drive shaft W.

In particular, the tube E is elongated along its own longitudinal central axis, and has a first axial end, in use distal from the resting surface P, and an opposed second axial end, in use proximal to the resting surface P.

The tube E is, therefore, inserted inside the supporting frame 125 and preferably arranged so that the first axial end is (at least partially) arranged externally to the supporting frame 125.

The main drive shaft W can therefore be locked axially inside the tube E itself by means of rolling members, and integral with the tube E itself along the translation direction.

In other words, the main drive shaft W can be fixed inside the tube E with a single rotational degree of freedom.

Preferably, the rolling members comprise thrust bearings, for example ball bearings.

In addition, the free end of the main drive shaft W (to which the abrasive grindstone U is fixed) opens (at least partially, along the translation direction) from (i.e. it projects beyond) the (through) channel defined by the tube E at the second end thereof, with the abrasive grindstone U which, in use, is therefore axially interposed between the resting surface P and the tube E.

Furthermore, the main motor 130 is (by means of the stator or by means of a casing of the main motor 130) fixed to the tube E and movable therewith (integral in translation thereto) along the translation direction.

The spindle 120 further comprises a bushing 145 (rigid, i.e. not deformable when subjected to the usual torsional and/or traction and/or flexion loads for which it is provided, preferably metallic), internally hollow.

The bushing 145 is rotatably associated with the supporting frame 125 with respect to a rotation axis parallel (and for example coincident) with the central rotation axis R1 of the main drive shaft 130.

The bushing 145, for example in the manner that will best appear below, is connected (indirectly) to the main drive shaft W in such a way that, by rotating, it causes a translation of the main drive shaft W along said translation direction parallel to the central rotation axis R1 of the main drive shaft.

This bushing 145, in particular, defines with the supporting frame 125 a screw-nut screw coupling, by means of a thread and a counter-thread (of a shape conjugated to the thread so as to define a shape coupling with it) made respectively on the bushing 145 and on the supporting frame 125.

In particular, said screw-nut screw coupling is such that a rotation of the bushing 145 in one direction (for example clockwise) causes a translation thereof along the translation direction in a first sense, while the rotation of the bushing 145 in the opposite direction (for example counterclockwise) causes a translation thereof in a second sense opposite to the first sense.

The bushing 145 wraps (circumferentially) around the tube E (which is therefore inserted coaxially inside the bushing 145), i.e. said first axial end of the tube E protruding from the supporting frame 125.

In particular, the tube E is inserted inside the bushing 145 and integral in translation thereto along the translation direction.

For example, the tube E can have a dragging ring that radially derives from the tube E itself (for example made as a single body with the tube E), and said dragging ring is substantially fitted to size (with reduced play) inside a circumferential slot, made at the inner surface of the bushing 145.

In this way, when the bushing 145, by rotating, translates along the translation direction, it pushes on the dragging ring, dragging therewith the tube E along the translation direction (in both senses, and with it the main drive shaft W and for example also the main motor 130).

For example, such a bushing 145 may be made available by a graduated vernier.

The spindle 120 can also comprise an anti-rotational pin 150 which is fixed (without residual degrees of freedom) to the supporting frame 125 so as to open into the cavity defined by the same that houses the tube E.

The pin 150 is also inserted (by means of a lower axial end thereof, in use) and accommodated inside a slot made in the tube E that develops longitudinally parallel to the translation direction.

In this way, the tube E can translate (dragged by the bushing 145), with respect to the supporting frame 125, along the translation direction with the (anti-rotational) pin 150 which, during said translation, remains contained inside the slot.

At the same time, the tube E is prevented from rotating (with respect to the supporting frame 125) by means of the anti-rotation pin 150 (which by mechanically interfering with the slot prevents the rotation of the tube E).

In this way, a rotation of the bushing 145 in a clockwise direction causes a translation of the tube E along the translation direction in a first sense, while a rotation of the bushing 145 in a counterclockwise direction causes a translation of the tube E in the translation direction in a second sense opposite to the first sense.

It is not excluded that the spindle 120 can be made constructively differently as long as it is provided with a bushing rotating about a rotation axis parallel to the central rotation axis R1 of the main drive shaft W and connected to the main drive shaft W so that a rotation of the bushing causes a translation of the main drive shaft W along the translation direction.

The spindle 120 then comprises an adjusting assembly configured to translate the main drive shaft W along said translation direction parallel to the central rotation axis R1 thereof with respect to the supporting frame 125.

The adjusting assembly, in particular, is connected (for example indirectly) to the bushing 145, as will better appear below, so as to impose the rotation thereof (selectively in one rotation sense or in the opposite sense), with consequent translation thereof along the translation direction in both directions (i.e. selectively in one sense or the other), thereby translating the main drive shaft (and the main motor 130) and the abrasive grindstone U connected to the end thereof.

The adjusting assembly comprises, for example, a secondary motor 155 of the electric type, provided with a stator and a rotor connected to a secondary drive shaft 160 so as to rotate the same (in both directions, i.e. selectively in one sense or in the opposite sense) around a respective central rotation axis R2 orthogonal to the central rotation axis R1 of the main drive shaft 130.

In particular, the secondary motor 155 may comprise a rigid support body (i.e. not deformable when subjected to the usual torsional and/or traction and/or flexion loads for which it is provided) and adapted to contain the secondary motor 160 itself, and the secondary drive shaft 160 is provided with a first (rear) end that remains axially contained inside the support body and with an opposed free (front) end protruding from the support body.

The adjusting assembly then comprises a driveline (for example of the belt type as will appear better below) configured to transmit the rotary motion of the secondary drive shaft 160 to the bushing 145.

In this way, the rotation of the secondary drive shaft 160 in one sense results in the rotation of the bushing 145 in one sense and therefore the translation of the main drive shaft 130 in one sense along said translation direction, while the rotation of the secondary drive shaft 160 in the opposite sense results in the rotation of the bushing 145 in the opposite sense and therefore the translation of the main drive shaft 130 in the opposite sense along the translation direction.

In particular, the secondary drive shaft 160 is connected to said driveline by means of a mechanism that allows the rotary motion of the secondary drive shaft 160 to be transmitted to an output shaft T orthogonal to the secondary drive shaft 160, i.e. rotating (on itself) about a rotation axis orthogonal to the central rotation axis R2 of the secondary drive shaft 160 and parallel and eccentric with respect to the central rotation axis R1 of the main drive shaft W.

Such a mechanism, for example, comprises (for example only) a reducer 165. Preferably, said reducer 165 may be of the worm screw type S.

For example, this reducer 165 can be provided, first of all, with an input gear 170 connected, directly or indirectly, to the secondary drive shaft 160 so as to be driven by the same.

This input gear 170, for example, comprises a first toothed wheel and a second toothed wheel that mesh with each other (so that the rotation of the first toothed wheel results in the rotation of the second toothed wheel), each of which is rotating about a rotation axis parallel to the central rotation axis R2 of the secondary drive shaft 160.

In particular, the first toothed wheel is connected, for example keyed or otherwise connected (for example by interposition of an auxiliary toothed wheel), to the secondary drive shaft 160 so as to be placed in rotation by it.

The reducer 165 then comprises an output gear Q, connected to the input gear 170 to receive the motion imposed by the secondary drive shaft 160.

The output gear Q comprises, first of all, a worm screw S, which is connected to the input gear 170 so as to be driven by it in rotation (on itself) about its own rotation axis parallel (and for example eccentric) to the central rotation axis R2 of the secondary drive shaft 160.

More in detail, the second toothed wheel of the input gear 170 is connected to the worm screw S, for example keyed on the worm screw S or in any case connected to the worm screw S, so that the rotation of the secondary drive shaft 160 (and therefore of the input gear 170) results in the rotation (on itself) of the worm screw S around said rotation axis. The worm screw S, by rotating, meshes on a respective toothed wheel of the output gear Q placing the same in rotation around a rotation axis orthogonal to the central rotation axis R2 of the secondary drive shaft 160 and parallel and eccentric to the central rotation axis R1 of the main drive shaft W.

The reducer 165, i.e. said output gear Q, therefore comprises said output shaft T adapted to be placed in rotation by it around said rotation axis parallel to and eccentric to the central rotation axis R1 of the main drive shaft W.

In particular, the toothed wheel of the output gear Q is connected to said output shaft T, for example keyed (or otherwise fixed) or otherwise connected, to said output shaft T so that the rotation of the toothed wheel (imposed by the rotation of the worm screw S) about its own rotation axis results in the rotation of the output shaft T about said rotation axis parallel and eccentric to the central rotation axis R1 of the main drive shaft W.

This output shaft T is connected, via the driveline, to the actuation bushing 145 of the main drive shaft 130.

This driveline comprises a driving pulley 180, which is mounted (fixed without residual degrees of freedom) to the output shaft T, i.e. to one (free) end of the output shaft T, of the reducer 165 and placed in rotation by (and integral in rotation with) it around said rotation axis of the output shaft T parallel (and eccentric) to the central rotation axis R1 of the main drive shaft W (i.e. parallel to the translation direction of the main drive shaft W). The driveline then comprises a driven pulley or toothed crown 185, preferably with a larger diameter with respect to the driving pulley 180, associated (for example keyed or fixed or possibly made) on the bushing 145.

The driveline again comprises a flexible member, in particular preferably consisting of a belt 190 (preferably toothed), closed on itself into a ring and wound on the toothed pulley connected (fixed and integral in rotation) to the output shaft T of the reducer 165 and on the pulley or toothed crown 185 associated with the bushing 145 (i.e. said graduated vernier) so as to transmit the (rotary) motion imposed by the output shaft T to the bushing 145 (actually placing the same in rotation with respect to said rotation axis parallel to the flanking direction, i.e. parallel to the rotation axis of the main drive shaft 130) and, therefore, by means of the screw-nut screw coupling between the bushing 145 and the supporting frame 125, translate (the bushing 145 and with it the tube E and) the main drive shaft W along the translation direction.

The driveline may further comprise, a tensioning assembly of the flexible member, i.e. of the belt 190.

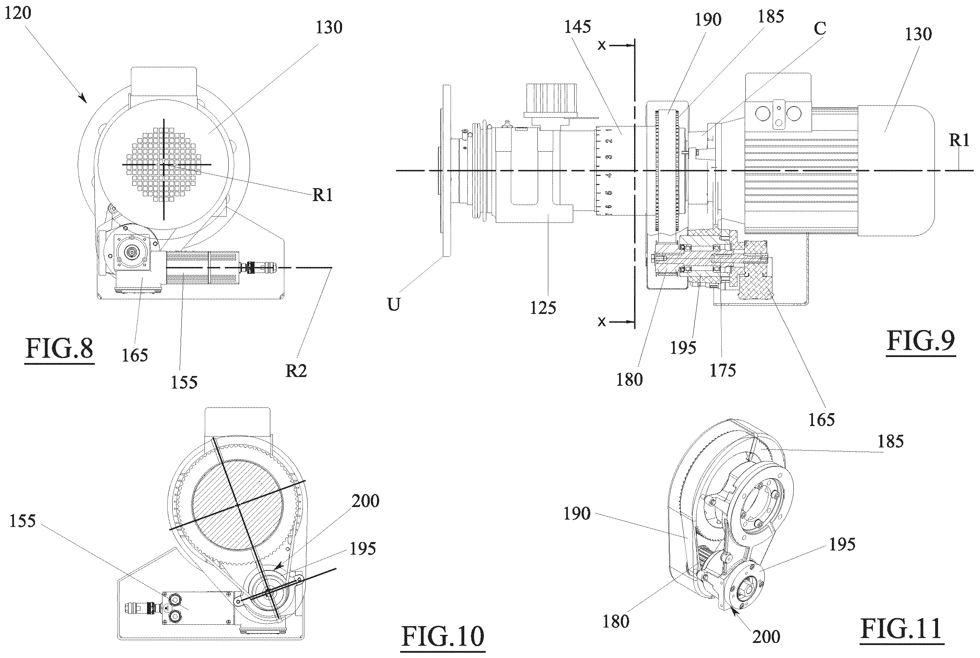

This tensioning assembly, as best visible in figure 10, may comprise an eccentric hub 195 fitted on the output shaft T (of the reducer 165), which is inserted into a cylindrical cavity 200 with a central axis parallel (and eccentric) to the central rotation axis R1 of the main drive shaft W and orientable with respect to the supporting frame 125 by rotation within the cylindrical cavity itself.

Said cylindrical cavity 200 is made in a support casing C, better visible in figure 9, and said support casing C is fixed, for example screwed, to the main motor 130 (for example to the stator or to a casing of the main motor 130 itself) and integral in translation along the translation direction thereto.

Preferably, to said support casing C (where said cylindrical cavity 200 is made, there can also be fixed (for example screwed), a casing of the reducer 165 such that the reducer is also integral in translation with the main motor 130 along the translation direction.

The driving pulley 180 of the driveline is mounted on the eccentric hub 195.

A variation in the orientation of the eccentric hub 195 inside the cylindrical cavity 200 therefore results in a variation in the spacing between the driving toothed pulley and the driven pulley or toothed crown 185, increasing or decreasing (depending on the rotation sense) the tension of the flexible member, i.e. of the belt 190.

The spindle 120 is rigidly fixed to a respective side bank 60, by means of the supporting frame 125, and further arranged so that the translation direction imposed by the adjusting assembly on the main drive shaft 130 (and on the abrasive grindstone U) is transverse, for example orthogonal, to the advancement direction A imposed on the slab(s) 15. The adjusting assembly is therefore able to move (for fine adjustment) the abrasive grindstone U closer to/away from the resting surface P and thus to the slab 15 placed on the resting surface P itself.

During use, the abrasive grindstone U of each spindle 120, i.e. the abrasive surface thereof, is adapted to be placed in a predetermined working position, wherein the abrasive surface of the abrasive grindstone U is intended to come into contact with a first flank to be rectified of the slab 15.

Each spindle 120 of each set is offset along the advancement direction with respect to the bridge supports 25 of the load-bearing frame 20, i.e. it is misaligned in plan (view) with respect to the bridge supports 25 of the load-bearing frame 20.

In particular, with reference to the squaring machine 10 illustrated in figure 1 which comprises three bridge supports 25, each set of spindles 120 comprises a first group of spindles 120 interposed axially (i.e. along the advancement direction) between an end bridge support 25 and the central bridge support 25 and a second group of spindles 120 interposed axially (i.e. along the advancement direction) between the central bridge support 25 and the other end bridge support 25.

Furthermore, each set of spindles 120 comprises at least one spindle 120 facing a spindle 120 of the other set of spindles 120, wherein the central rotation axes of the main drive shafts of the facing spindles 120 are coaxial to each other.

Each set of spindles 120 comprises a plurality of spindles 120 arranged with the central rotation axis R1 (of the main drive shaft W, and therefore of the abrasive grindstone U) horizontal (or substantially horizontal, i.e. parallel to the resting surface P) and orthogonal to the advancement direction A.

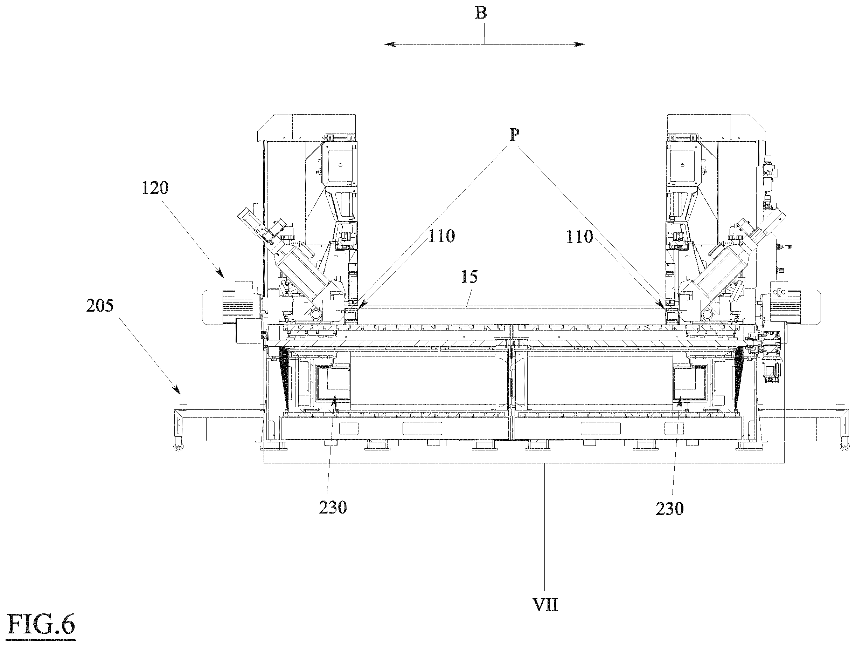

Each set of spindles 120, as can be understood from figure 6, can comprise at least one spindle 120, arranged with the main rotation axis R1 (of the main drive shaft W, and therefore of the abrasive grindstone U) lying on a plane inclined with respect to the horizontal plane and in any case orthogonal to the advancement direction A (adapted to carry out a so-called chamfering operation).

The squaring machine 10 then comprises at least one pair of platforms 205 each of which is fixed externally (i.e. on the opposite side with respect to the spacing between the side banks 60, i.e. fixed to a respective side bank on the opposite side with respect to the resting surface P) to a respective side bank 60 and movable therewith along the flanking direction B.

Each platform 205, as will better appear below, is adapted to make available a substantially horizontal walkable surface 210, placed at a greater vertical height than the ground G for the squaring machine 10 to rest on, to facilitate the operator in reaching the spindles 120 mounted on the side bank 60.

In particular, each platform 205 is fixed to the respective bank so as to be arranged below one or more of said spindles 120 of a respective set of spindles 120 at a (not zero) distance therefrom.

Preferably, as best visible in figure 1 or 2, the squaring machine 10 may comprise a platform 205 associated with each side bank 60 for each pair of bridge supports 25 (and axially interposed therebetween along the advancement direction A).

For example, with reference to the illustrated squaring machine 10 comprising three bridge supports 25, the squaring machine 10 comprises a pair of platforms 205 fixed externally (i.e. on the opposite side with respect to the spacing between the side banks) to one side bank 60, and a pair of platforms 205 fixed externally to the other side bank 60.

Each pair of said platforms 205 comprises a platform 205 interposed axially between one end bridge support 25 and the central bridge support 25 and arranged below the first group of spindles 125 of the respective set, and a platform interposed axially between the central bridge support 25 and the other end bridge support 25 and arranged below the second group of spindles 125 of the respective set.

Each platform comprises a floor 215, rigid or non-deformable when subjected to the usual loads for which it is envisaged, and at least one pair of support legs 220 connected below the floor 215.

For example, each platform 205 may comprise three support legs 220 connected below the floor, preferably homologous to each other, and also preferably placed equidistant from each other.

Preferably, the support legs 220 can also be aligned with each other along the advancement direction A.

For example, said support legs 220 can be connected to the floor 215, below it, at an edge of the floor 215 distal from the respective side bank 60.

Each of the support legs 220 rests on the ground G by means of a rolling body 225, preferably a wheel having at least one horizontal rotation axis orthogonal to the flanking direction (i.e. parallel to the advancement direction).

For example, it is possible to provide that each floor 215 can be hinged to the respective side bank 60 around a horizontal hinging axis orthogonal to the flanking direction B (i.e. parallel to the advancement direction A), so that the platform 205 is alternately movable between a working position, in which the floor 215 defines a horizontal walkable surface, and a rest position, in which the floor 215 is inclined with respect to the horizontal. Alternatively, it is possible to provide that the floor 215 can be rigidly fixed to the respective bank in such a way as to always define (or make available) said horizontal walkable surface.

Each platform, as can be better appreciated in figure 2, is axially offset with respect to the bridge supports 25 of the load-bearing frame 20 along the advancement direction A, i.e. misaligned (according to a plan view) with respect to the bridge supports 25 of the load-bearing frame 20.

The squaring machine 10 then comprises at least one pair of suction ducts 230, each of which is fixed to a respective side bank 60 and movable therewith along the flanking direction B.

Each suction duct 230 is adapted to allow the suction of dust generated by the removal of material from the slab made by the abrasive tools of the respective set of spindles 120. In this sense, each suction duct is adapted to be connected to a suction impeller, for example forming part of the squaring machine 10 or external thereto, so as to allow the suction of dust generated during the squaring processing of the slab.

Each suction duct may be subservient to the abrasive tools of at least a part of the set of spindles 120 of a side bank 60.

For example, with reference to the squaring machine 10 illustrated in the attached figures, this may comprise a pair of suction ducts 230 for each set of spindles 120, of which a suction duct subservient to the first group of spindles 120 of the set and a second suction duct subservient to the second group of spindles 120 of the respective set.

Each of said suction ducts 230 is arranged with the longitudinal axis substantially parallel to the advancement direction A and is arranged at a height below the crossbars connecting the bridge supports 25 and above the lower end of the uprights 30 thereof.

In particular, each suction duct 230 is arranged at a height below the crossbars 35 of the bridge supports 25 and above the reinforcing crossbar 40 and movable in the interspace therebetween.

Each suction duct 230 then comprises (or is in any case connected to) at least one suction nozzle that opens above towards the spindles 120, for example at a vertical height below (or at most substantially equal to) that of the resting surface P 65.

In particular, each suction duct may comprise (i.e. be connected to) a plurality of suction nozzles each of which is associated with a respective spindle 120, i.e. each of which is arranged (and opens) at a respective spindle 120.

Each suction nozzle can branch from the respective suction duct, developing substantially vertically away therefrom, and has an end distal from the suction duct by means of which it opens towards (for example at) the respective spindle 120.

Preferably, each suction nozzle is vertically (at least partially) aligned with (and placed below) the respective spindle 120 to which it is associated, for example in particular vertically aligned with (and placed below) the abrasive grindstone U of the respective spindle 120.

The squaring machine 10 can also comprise an electronic control unit Y (only schematically illustrated in figure 1), provided with a memory unit, and which can be operatively connected to a user interface of the squaring machine 10 by means of which the electronic control unit Y can emit one or more signals, for example of the visible and/or sound type, perceptible by a user or possibly receive one or more inputs.

For example, the user interface could be defined by a PC with monitor and, for example, be fixed to the load-bearing frame 20 of the squaring machine 10 or alternatively positioned remotely or still be of the type of a movable device.

The electronic control unit can be configured for the management and control of the operation of the squaring machine 10.

In particular, the electronic control unit can be operatively connected to the main motor 130 (of each spindle) to command its activation and deactivation, thus activating and deactivating the rotation of the relative grindstone U around the central rotation axis R1. The electronic control unit Y can also be operatively connected to the adjusting assembly (of each spindle) to command the activation and deactivation thereof so as to selectively adjust the position of the abrasive grindstone U along the advancement direction.

Still, the electronic control unit Y can be operatively connected to the translation movement of the side bank 60 to command the activation and deactivation thereof so as to adjust the mutual position of the side banks 60 along the flanking direction B.

The invention thus conceived is susceptible to many modifications and variants, all falling within the same inventive concept.

Moreover, all details can be replaced by other technically equivalent elements.

In practice, the materials used, as well as the contingent shapes and dimensions, can be whatever according to the requirements without for this reason departing from the scope of protection of the following claims.

## Claims

1. A spindle (120) for squaring machines (10) which comprises:
- a supporting frame (125);
- a main motor (130) supported by the supporting frame (125) and provided with a main drive shaft (W) rotatable around a central rotation axis (R1) thereof, wherein one free end of the main drive shaft (W) is provided with a tool-holder plate to which an abrasive tool (U) is adapted to be fixed;
- a bushing (145) rotatably associated with the supporting frame (125) with respect to a rotation axis parallel to the central rotation axis (R1) of the main drive shaft (W) so that, rotating, it causes a translation of the main drive shaft (W) along a translation direction parallel to the central rotation axis (R1),
- an adjusting assembly configured to translate the main drive shaft (W) along said translation direction, wherein the adjusting assembly comprises:
∘ a secondary motor (155) provided with a secondary drive shaft (160) which is rotatable with respect to a central rotation axis (R2) thereof orthogonal to the central rotation axis (R1) of the main drive shaft (W),
∘ a driveline configured to transmit the rotary motion of the secondary drive shaft (160) to the bushing (145).

2. The spindle (120) according to claim 1, wherein the secondary drive shaft (160) is connected to the driveline by means of a reducer (165), wherein preferably the reducer (165) is provided with an input gear pair connected to the secondary drive shaft (160) and an output gear pair provided with an output shaft (175) orthogonal to the secondary drive shaft (160) and parallel and eccentric with respect to the central rotation axis (R1) of the main drive shaft (W), wherein the output shaft (175) is connected, by means of the driveline, to the bushing (145).

3. The spindle (120) according to claim 2, wherein the reducer (165) is a worm reducer.

4. The spindle (120) according to claim 2 or 3, wherein the driveline comprises a driving pulley (180) connected to the output shaft (175) of the reducer and a driven pulley or toothed crown (185), preferably with a larger diameter with respect to the driving pulley, associated with the bushing (145) and a belt (190), preferably toothed, looped on the driving pulley (180) and the driven pulley or toothed crown (185).

5. The spindle (120) according to the preceding claim, wherein the driveline comprises a tensioning assembly of the belt (190).

6. The spindle (120) according to the preceding claim, wherein the tensioning assembly comprises an eccentric hub (195) fitted on the output shaft (175) of the reducer and orientable with respect to the supporting frame (125) and on which the driving pulley (180) is mounted, a change in the orientation of the eccentric hub (195) causing the change of the spacing between the driving pulley (180) and the driven pulley or toothed crown (185).

7. A squaring machine (10) for slabs (15) which comprises:
- a load-bearing frame (20);
- a pair of side banks (60) supported by said load-bearing frame and movable in mutual approach/distancing along a mutual horizontal flanking direction (B), wherein each side bank (60) carries:
- a set of spindles (120) according to claim 1; and
- at least one belt (110) of a conveyor, wherein said belts make available a movable resting surface (P) adapted to receive and move at least one slab (15) or a succession of slabs along a horizontal advancement direction (A) orthogonal to the flanking direction (B).

8. The squaring machine (10) according to the preceding claim, wherein each set of spindles (120) consists of a plurality of spindles (120) aligned along an alignment direction parallel to the advancement direction (A) and arranged with the central rotation axis (R1) of the main drive shaft (W) lying on a plane orthogonal to such an alignment direction.

9. The squaring machine (10) according to claim 7 or 8, wherein each set of spindles (120) comprises at least one spindle (120) facing a spindle of the other set of spindles, wherein the central rotation axes (R1) of the main drive shafts (W) of the facing spindles are coaxial to each other.
